# FASCICULE DE BREVET EUROPEEN

(11) **EP 0 578 806 B1**
(45) Date de publication et mention de la délivrance du brevet: **18.12.1996**
(21) Numéro de dépôt: 93904134.9
(22) Date de dépôt: 28.01.1993
(51) Int. Cl.: C09K 7/00, C09K 7/02, E21B 33/138, C09K 17/00

(54) **L'UTILISATION D'UN POLYMèRE EN SOLUTION AQUEUSE POUR L'INHIBITION DE GONFLEMENT DES FORMATIONS ARGILEUSES REACTIVES**
Verwendung von Polymeren mit hydrophilen und hydrophoben Segmenten in wässrigen Lösungen zur Inhibierung der Quellung reaktiver, tonartiger Formationen
USE OF POLYMERS HAVING HYDROPHILIC AND HYDROPHOBIC SEGMENTS FOR INHIBITING THE SWELLING OF REACTIVE ARGILLACEOUS FORMATIONS

(30) Priorité: 31.01.1992 FR 9201199
(43) Date de publication de la demande: 19.01.1994
(73) Titulaire: SERVICES PETROLIERS SCHLUMBERGER, F-75007 Paris (FR); INSTITUT FRANCAIS DU PETROLE, 92506 Rueil-Malmaison (FR)
(72) Inventeur: AUDIBERT, Annie, F-78110 Le Vesinet (FR); LECOURTIER, Jacqueline, F-92500 Rueil-Malmaison (FR); BAILEY, Louise, Comberton, CambridgeCB3 7EQ (GB); MAITLAND, Geoffrey, Girton, Cambridge CB3 0LL (GB)
(74) Mandataire: Andreeff, François
(86) Numéro de dépôt international: FR9300090
(87) Numéro de publication internationale: WO9315164

(56) Documents cités:
- EP-A- 0 202 137
- EP-A- 0 308 138
- FR-A- 2 185 745
- US-A- 4 604 216
- WORLD OIL (DRILLING SECTION) Novembre 1957, pages 101 - 108 R.F.BURDYN,L.D. WIENER 'CALCIUM SURFACTANT DRILLING FLUIDS'
- DATABASE WPIL Derwent Publications Ltd., London, GB; AN 92-129953

## Description

La présente invention concerne l'utilisation d'un polymère à motifs hydrophiles et hydrophobes en solution aqueuse peut inhiber le gonflement d'argiles réactives en présence d'eau, les polymères étant adapté à inhiber les formations argileuses fortement réactives en présence d'eau. Le procédé selon l'invention consiste notamment à mettre en contact les formations réactives avec une solution aqueuse comportant des polymères hydrophiles et hydrophobes.

Une substance hydrophobe est généralement définie comme étant une substance organique non polaire. Un polymère hydrophile/hydrophobe selon la présente invention sera tel que la balance entre les motifs hydrophiles et hydrophobes fasse que ce polymère soit soluble dans l'eau.

Dans le domaine du forage pétrolier, les problèmes posés par les formations argileuses sont bien connus. Lorsque l'on pénètre par forage dans ces formations en utilisant des fluides de forage à base d'eau, il se produit des réactions chimiques complexes au sein de la structure argileuse par échange ionique et hydratation. Ces réactions ont pour conséquences un gonflement, un délitage ou une dispersion des particules argileuses de la formation traversée par le forage. Les problèmes se posent aussi bien au niveau de la contamination du fluide de forage par les argiles, de la stabilité des parois du forage ou encore de la migration des particules argileuses fines contenues dans une roche réservoir.

Dans cette demande, nous utiliserons la terminologie de "formations argileuses" pour décrire des formations géologiques comportant un certain taux de particules argileuses, le taux pouvant être très important ou très faible. Dans ce qui suit, on utilisera les abréviations usuelles suivantes Hb et Hy pour respectivement désigner hydrophobe et hydrophile.

Dans le domaine de l'exploitation pétrolière, les problèmes cités plus haut ont notamment été résolus en utilisant des fluides de forage non aqueux. Par exemple en forant à l'air, mais plus couramment avec un fluide dont la phase continue est à base d'hydrocarbure liquide. Mais le forage avec ces types de boues dites "à l'huile" présente de nombreux inconvénients : coût prohibitif du fluide, toxicité mais surtout pollution par l'huile des rejets. Les réglementations actuelles sur les rejets entraînent désormais des techniques et des coûts de traitement tels que la boue à l'huile est bien souvent impossible à mettre en oeuvre.

Dans ce cas, les fluides à base d'eau contiennent des polymères hydrosolubles adaptés à doter un fluide de forage des caractéristiques nécessaires, c'est à dire : une viscosité suffisante pour nettoyer correctement le puits, une capacité à réduire le filtrat et à disperser les particules fines. Mais ces additifs ne sont pas satisfaisants en ce qui concerne l'inhibition du gonflement des argiles dès que la réactivité des formations traversées est importante, ce qui est le cas notamment en mer du Nord.

Les systèmes les plus largement utilisés actuellement sont des fluides comportant des polymères et des ions potassium. Les polymères sont souvent des polyacrylamides partiellement hydrolysés et/ou des polymères cationiques. Ces systèmes ont fréquemment montré leur manque d'efficacité.

On connaît par le brevet US-A-4299710, un fluide de forage constitué par une combinaison en solution aqueuse d'épaississants tels qu'un copolymère et un polysaccharide. Ce fluide a, entre autres propriétés, celle de limiter le gonflement des argiles. Mais la structure du copolymère décrit a une masse moléculaire au moins égale à 25 104 daltons et il n'y a aucune relation d'optimisation entre la masse moléculaire et la longueur de la partie hydrophobe. De plus, il s'agit d'un fluide complexe dont les caractéristiques découlent des effets combinés de produits, et particulièrement adapté à un fluide de forage contenant peu de solides notamment des argiles.

On connaît par le document US-4.604.216 un fluide de forage comportant au moins un polymère hydrophyle/hydrophobe mais qui ne décrit pas l'utilisation de ce polymère comme inhibiteur de gonflement des argiles.

La présente invention concerne une utilisation d'un polymère à motifs hydrophiles (Hy) et hydrophobes (Hb) en solution aqueuse.

Les motifs hydrophobes contiennent entre 1 et 30c pour les groupements alkyles, la proportion moléculaire desdits motifs hydrophobes est compris entre 5 et 60 %, et ledit polymère a au moins une des structures suivantes :
* structure a) du type (Hb)-(chaîne hydrophile Hy)-(Hb), dans laquelle la chaîne hydrophile Hy est constituée d'une chaîne de polyoxyéthylène (ou POE) ayant la formule suivante: 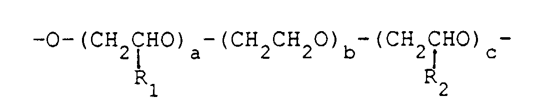
   où R₁ et R₂ sont chacun: H, un radical alkyle, aryle ou alkyl-aryle de C₁-C₃₀,
   où a, b et c peuvent prendre respectivement les valeurs de : 0 à 50, 0 à 150 et 0 à 50, et (a+b+c) non nul,
      - et dans laquelle les groupements hydrophobes Hb sont des chaînes alkyles ou alkyl-aryles C₁C₃₀ reliées à la chaîne hydrophile Hy par des groupements renfermant au moins une fonction uréthane de la formule générale suivante : 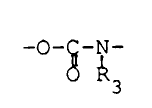
   où R₃ est H ou un radical alkyle de C₁-C₃₀, un radical cycloalkyle de C₆-C₃₀, un radical phényle éventuellement substitué par un, deux ou trois radicaux alkyles de C₁-C₃₀, ou un ester gras du type sorbitan,
   la masse moléculaire dudit polymère est supérieure à 27000 daltons.
* structure b1) du type -(Hb)-(Hy)- avec une répartition statistique, ladite structure bl) étant un dérivé de polyacrylamide issu de la copolymérisation de l'acrylamide avec un co-monomère hydrophobe, et dans lequel le motif hydrophile est l'acrylamide éventuellement sous forme d'acide acrylique, d'acrylate ou de sulfonate suivant la formule suivante : 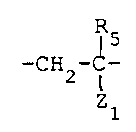 où R₅ est H ou CH₃, et Z₁ est COOH ou CONH₂ ou CONHR"₁, R"₁ est un radical alkyle, aryle ou alkyl-aryle de C₁-C₃₀ substitué sulfonate.
* structure b2) du type -(Hb)-(Hy)- avec une répartition statistique, ladite structure étant issue de la polymérisation radicalaire de monomères éthyléniques contenant des fonctions carboxyliques, notamment un copolymère d'acrylate/acrylate d'alkyle correspondant à la formule suivante : 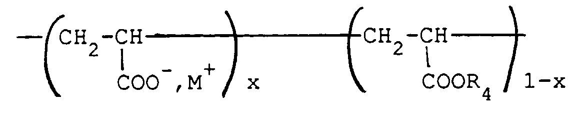 où x est compris entre 0,4 et 0,8, où M est H ou Na ou K ou tout autre ion monovalent, et où la longueur des motifs hydrophobes R₄ est choisie en fonction de la masse moléculaire dudit polymère selon les règles suivantes :
   - pour un polymère ayant une masse moléculaire inférieure à 10⁵ daltons, R₄ contient au moins deux atomes de carbone,
   - pour un polymère ayant une masse moléculaire compris entre 10⁵ et 2,5 10⁶ daltons, R₄ contient au moins quatre atomes de carbone,
* structure c) constituée d'une chaîne principale comportant des motifs à groupement hydrophiles Hy et des motifs à chaînes latérales hydrophobes Hb, constituant une structure en "peigne", ladite structure comportant des motifs acides carboxyliques partiellement estérifiés dont les groupements esters, hydrophiles, sont de type POE, et des motifs à chaîne latérale hydrophobe répondant aux formules générales suivantes : 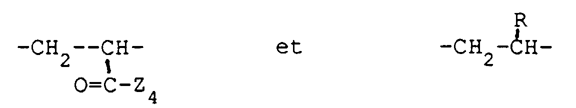 où R est une chaîne hydrophobe et Z₄ est OH ou (POE)R'₁, et la masse moléculaire est supérieur à 20000 daltons.

Le polymère correspondant à la structure a) peut comporter une chaîne hydrophile Hy de la forme (CH₂CH₂O)_{b}, avec b de 1 à 150, un groupement hydrophobe Hb de la forme CH₃(CH₂)₁₁ ou 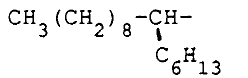
- et les groupements à fonction uréthane de liaison de Hb sur Hy peuvent être de la forme :

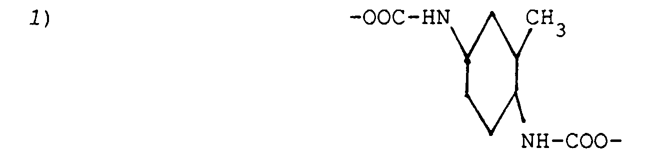

   *2)* -OCO-NH-(CH₂)₆-NH-COO-

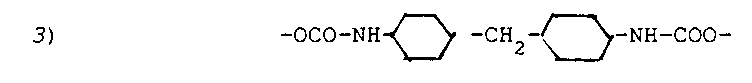

Le motif hydrophobe Hb de la structure bl) peut avoir au moins une des formes suivantes :

N-alkylacrylamide, acrylate d'alkyle, acrylamide N-substitué ou acrylate substitué, dont la partie substituée est un tensioactif non ionique, ledit motif hydrophobe ayant la formule générale suivante : 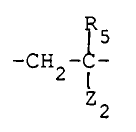 où R₅ est H ou CH₃ et Z₂ est COOR₇, COOR'₁, CONR₁R'₁ ou CONR₁R₇, R₇ étant un tensioactif non ionique constitué d'une chaîne polyoxyéthylènique d'alkyle et R'₁ est un radical alkyle aryle ou alkyl-aryle de C₁-C₃₀.

Des motifs cationiques peuvent être introduits dans la structure b1), lesdits motifs ayant la formule générale suivante : 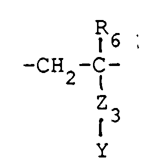 où R₆ est H ou CH₃, Z₃ est (CH₂)ₙ, COO(CH₂)ₙ ou CONH(CH₂)ₙ avec n de 0 à 20, et Y est R₁N⁺R'₁R₂ dans lequel un seul des trois radicaux peut être H.

Le polymère selon la structure b2) peut avoir pour x une valeur environ de 0,55, R₄ peut comporter quatre atomes de carbone et ledit polymère peut avoir une masse moléculaire comprise entre 5 10⁵ et 2 10⁶ daltons et préférentiellement proche de 10⁶ daltons.

Le polymère selon la structure b2) peut avoir pour x environ la valeur de 0,8, R₄ peut comporter quatre atomes de carbone et ledit polymère peut avoir une masse moléculaire comprise entre 10⁴ et 5 10⁴ daltons, et préférentiellement proche de 17 10³ daltons.

Pour le polymère selon la structure c), R peut être une chaîne alkyle de C₁₂ à C₁₄ et Z₄ peut être OH ou (POE)ₘCH₃ et m de 6 à 10.

L'utilisation selon les caractéristiques précédentes peut comporter une solution aqueuse ayant entre 1 et 10 g/litre de polymère hydrophile et hydrophobe.

L'utilisation selon l'invention peut être mise en oeuvre dans des fluides en contacte des formations argileuses réactives, notamment des fluides de forage, de fracturation, de cimentation, de traitement des puits ou de récupération assistée.

On connaît notamment par les documents EP-0398576, GB-2128659 ou EP-0311799 des polymères ou des fluides comportant des motifs hydrophobes, mais aucun ne concerne l'inhibition du gonflement des argiles.

L'idée maîtresse de la présente invention est la détermination d'une structure optimisée d'un polymère comportant des motifs hydrophiles et des motifs hydrophobes. La masse moléculaire doit être également optimisée en fonction de la structure du polymère. En effet, l'obtention d'une forte et dense adsorption de ce polymère sur les formations argileuses et d'un caractère fortement hydrophobe de la couche de ce polymère adsorbé, apparaît notamment comme une des conditions favorables pour le contrôle de l'inhibition du gonflement des formations argileuses.

L'un des enseignements de la présente invention est d'avoir mis en évidence certains paramètres permettant au technicien de contrôler le caractère inhibiteur d'argile d'une solution selon l'invention.

La densité de la couche de polymère obtenue par adsorption, peut être faible à cause d'une masse moléculaire trop faible, mais peut être contrôlée, en particulier améliorée, en optimisant la structure du polymère.

De même, un polymère ayant une masse moléculaire trop forte et une teneur en motifs hydrophobes trop importante peut révéler, dans certains tests, une bonne capacité d'adsorption notamment sur les argiles, tant que la solution de polymère hydrophobe selon l'invention n'est pas mise en circulation. On a en effet constaté que l'épaisseur de la couche adsorbée de certains polymères, non optimisés en terme de masse moléculaire, taux et longueur de chaîne hydrophobe, était détruite partiellement lors de test dynamique simulant la circulation d'un fluide de forage. Le caractère inhibiteur d'une telle solution est alors fortement affecté.

Le caractère hydrophobe de la couche de polymère adsorbé limite la diffusion de l'eau et des ions de la solution aqueuse et ainsi inhibe le gonflement et/ou la dispersion des formations argileuses.

De plus, on constate qu'un polymère correspondant à la structure b) présente une très bonne résistance aux contaminants habituels, en particulier les ions calcium, ainsi qu'aux hautes températures.

La détermination du polymère sélectionné porte, notamment et essentiellement, sur le choix de la structure la mieux adaptée, de la répartition entre eux des motifs hydrophiles et hydrophobes, de la masse moléculaire du polymère obtenu et de la nature des différents monomères.

Dans la présente invention, la dénomination de POE correspond à la chaîne polyoxyéthylène telle que définie par la formule générale donnée plus haut pour la structure a).

On pourra se référer à l'ouvrage suivant "Polymers in aqueous media, performance through association" ed J.E. Glass, Advances in Chemistry series, n° 223, ACS 1989.

Les solutions de polymère hydrophile/hydrophobe, dans le cadre de cette invention, sont alcalines et pourront comporter d'autres composants destinés à fournir au fluide comportant ladite solution, d'autres caractéristiques que celle d'inhibition du gonflement des roches contenant des argiles.

Dans le cadre de cette invention, des fluides de forage peuvent comporter en solution aqueuse, les polymères hydrophiles et hydrophobes décrits plus haut, afin d'inhiber le gonflement des roches contenant des argiles réactives rencontrées au cours du forage. Ces fluides de forage peuvent notamment être des fluides classiques en teneur en colloïdes, des fluides à basse teneur en solides ou des fluides à base de polymères.

En effet, ce type de polymère ne pose pratiquement aucun problème d'incompatibilité en présence des autres additifs généralement utilisés notamment dans les fluides de forage.

L'invention sera mieux comprise et ses caractéristiques seront mieux appréciées à la lecture des expérimentations suivantes, nullement limitatives, notamment illustrées par les figures ci-annexées, parmi lesquelles :
- la figure 1 représente le gonflement d'un échantillon contacté par un polymère selon l'invention,
- la figure 2 représente la stabilité en température d'un polymère selon l'invention,
- la figure 3 représente la stabilité dans le temps d'un polymère selon l'invention porté à la température de 90°C,
- la figure 4 représente la stabilité aux ions calcium d'un polymère selon l'invention en fonction du temps,
- la figure 5 donne les résultats d'un test de désagrégation,
- la figure 6 représente le schéma d'une cellule de test,
- la figure 7 donne les résultats de test dans la cellule de la figure 6,
- la figure 8 représente la teneur en eau d'un échantillon testé dans la cellule, en fonction de la distance à l'axe de l'échantillon.

Le polymère dénommé ici H3, voit ses propriétés et avantages démontrés par les tests décrits ci-après. La structure H3 est un copolymère acrylate/acrylate de butyle contenant sensiblement 20 % en poids moléculaire d'acrylate de butyle et a la formule générale suivante : 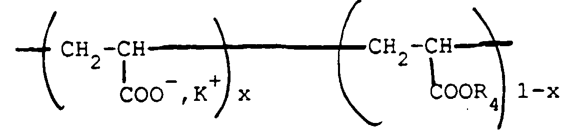 où R₄ est n-butyle et x = 0,8

La masse moléculaire de ce polymère est sensiblement de 17 10³ daltons.

On comparera le comportement du polymère H3 avec un polymère dénommé H6 ayant la même formule générale mais contenant 45 % en poids moléculaire d'acrylate de butyle. Le polymère H6 a pour valeur de x, sensiblement 0,55, et une masse moléculaire d'environ 8 10⁶ daltons.

Un autre polymère dénommé H1 est testé. La structure de H1 correspond à la structure a) décrite plus haut et a la formulation suivante :
- partie hydrophile: (CH₂CH₂O)_{b} avec b de 1 à 150,
- partie hydrophobe: CH₃(CH₂)₁₁,
- partie uréthane de liaison de Hb sur Hy :

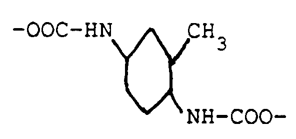

La masse moléculaire de ce polymère est sensiblement de 27000 daltons.

Un quatrième polymère dénommé H2 est testé. La structure de H2 est suivant le modèle c) et comporte des motifs acides carboxyliques partiellement estérifiés dont les groupements esters, hydrophiles peuvent être de type POE et des motifs à chaîne latérale hydrophobe, de la formule générale suivante : 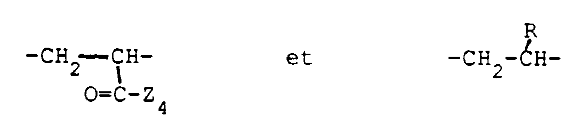 où R est une chaîne alkyle de C₁₂ à C₁₄ et Z₄ est OH ou (POE)ₘCH₃, et m de 6 à 10.

La masse moléculaire est supérieure à 20000 daltons.

Toutes les solutions testées seront sensiblement à pH 8 et en présence de 5 g/litre de KCl sauf pour les tests 0 et 5.

Les concentrations en polymère selon l'invention se situent dans la fourchette de 1 à 10 g/litre et plus précisément à environ 6 g/litre pour les polymères H6 et H3. Le choix de ces concentrations n'est nullement limitatif de la portée de l'invention.

### Test 0 :

Pour mesurer le taux d'adsorption du polymère selon l'invention, on met en contact une solution de montmorillonite Green Bond échangée sous forme potassique et dispersée dans l'électrolyte considéré, avec une solution de polymère dans le même électrolyte.

Les conditions d'expérimentation sont : température de 30°C, agitation à 10 tour/min pendant 24 heures, rapport S/L de solide/liquide compris entre 2 10⁻⁴ et 2 10⁻³. Du fait de l'autocoagulation et de la floculation des particules, les mesures sont extrapolées à S/L = 0. Cette valeur extrapolée correspond à l'adsorption du polymère exprimée en milligramme par gramme de particule argileuse. En présence de 0,1 g/litre de KCl, et pour un polyacrylamide non hydrolysé, H1 et H2, on obtient respectivement 700, 540 et 200 mg/g.

On rappelle que ces polymères ont respectivement une masse moléculaire de 10⁷, 27000 et 20000 daltons.

Dans les mêmes conditions d'essai, un polyacrylamide non hydrolysé de masse moléculaire d'environ 20000 daltons, s'adsorbe à environ 70 mg/g et à environ 600 mg/g pour une masse moléculaire d'environ 10⁶ daltons. Cela est décrit par J.Y. Bottero, M. Bruant et J.M. Cases dans J. of Colloïd and Interf.Sci.; 124, n° 2, Aug. 1988, 515-527.

A plus forte salinité, environ 10 g/litre de KCl, l'adsorption du polyacrylamide non hydrolysé et de H6 est respectivement de 400 mg/g et de 4300 mg/g.

Dans les mêmes conditions, l'adsorption du polymère H3 est du même ordre de grandeur que celle du polyacrylamide non hydrolysé alors que leurs masses moléculaires sont respectivement 17000 et 10⁷ daltons.

Cet essai met en évidence la forte capacité d'adsorption des polymères hydrophiles et hydrophobes selon l'invention sur les argiles par rapport à des polyacrylamides de masse moléculaire comparable.

### Test 1 :

Pour tester la capacité d'inhibition du polymère selon l'invention, on met en contact un échantillon de montmorillonite Green Bond avec une solution contenant le polymère. L'échantillon est sous forme d'une pastille d'argile dénommée cake, compactée sous une pression de 100 à 1500 bars et contenant 43 % de calcium échangeable. Les différents échantillons de cakes utilisés ont une activité comprise entre 0,5 et 0,98. L'électrolyte utilisé a une activité comprise entre 1 et 0,995. Les activités ont été ici mesurées à l'aide d'un électrohygromètre fabriqué par la Société Novasina (Suisse).

Les conditions d'expérimentation sont : température de 30°C, rapport volumique solide/liquide égal à 0,1, avec une agitation douce et une cinétique suivie sur 24 heures.

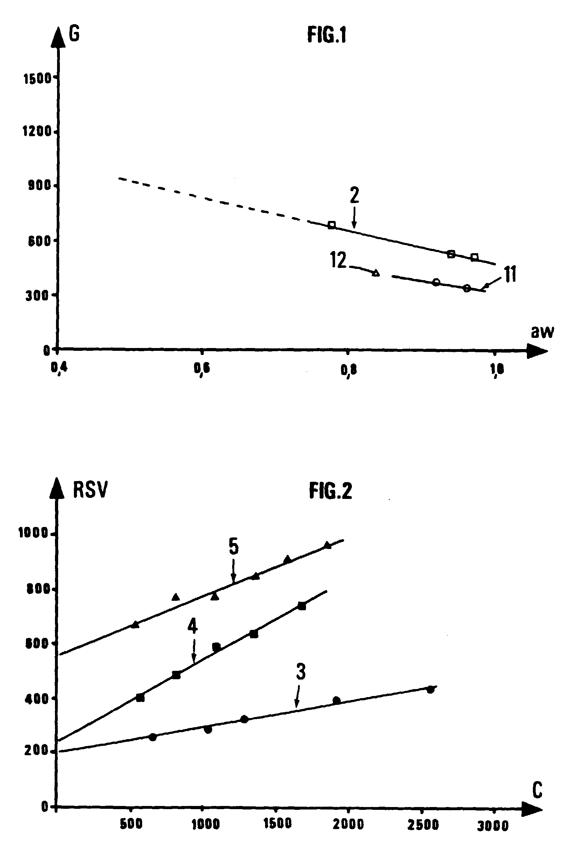

Les résultats sont illustrés par la figure 1, où en abscisse sont portés l'activité aw de l'échantillon et en ordonnée, le gonflement G de l'échantillon, donné en pourcentage.

La droite 11 relie les différents points correspondant à des échantillons de cake d'activité différente. On voit que le copolymère hydrophile et hydrophobe H3 est efficace quel que soit le rapport entre l'activité de l'électrolyte et l'activité du cake de Green Bond.

Ce résultat est à comparer avec les travaux de M.E. Chenevert décrits par celui-ci dans "Shale alteration by water adsorption" dans Journal of Petroleum Technology, Sept. 1970, où celui-ci montre que pour inhiber le gonflement d'une argile, il est nécessaire d'équilibrer les activités de l'eau de la boue de forage et de l'eau dans l'argile. Jusqu'à présent, l'art antérieur préconisait d'équilibrer les activités ou potentiels chimiques en ajoutant suffisamment de sels dans la boue, en particulier du chlorure de potassium.

Le procédé selon l'invention révèle au contraire que plus le déséquilibre des activités est grand, meilleure est l'efficacité du polymère H3 comparativement au polyacrylamide partiellement hydrolysé testé dans les mêmes conditions. Les résultats représentés par la droite 2 montrent que le gonflement des échantillons est nettement supérieur en présence de polyacrylamide (droite 2) qu'en présence de H3 (droite 11) ou de H1 (12).

Pendant le test, la cinétique du gonflement a été suivie pendant 24 heures, on a pu noter que la vitesse de gonflement est réduite avec les polymères hydrophobes tels H3 et H1.

Comparativement et pour fixer les idées, un échantillon de cake, similaire aux précédents, est entièrement délité et dispersé par suite de son gonflement quand celui-ci est plongé dans une saumure simple de 5 g/litre de KCl.

### Test 2 :

Un des grands inconvénients des polymères connus de l'art antérieur, est leur instabilité relative à la température. Aussi, le procédé selon la présente invention présente l'avantage de conserver une bonne stabilité de sa structure aux températures conventionnellement rencontrées dans les forages pétroliers. En effet, si les motifs hydrophiles et hydrophobes sont altérés, que ce soit dans leur disposition ou leur nombre, la capacité d'inhibition de la solution selon l'invention peut en être fortement atténuée. La figure 2 montre l'évolution de la viscosité des solutions d'un polymère ayant une structure identique à celle de H6, mais de masse moléculaire au moins égale à 10⁶ daltons. En abscisse, on a porté l'échelle des concentrations C en polymère et en ordonnée la viscosité spécifique réduite RSV. La viscosité spécifique réduite est égale à (Etaᵣ-1)/c, avec Etaᵣ viscosité relative et c concentration.

La droite 3 représente la viscosité initiale du polymère hydrophile et hydrophobe testé en fonction de sa concentration et à la température de 30°C.

Les droites 4 et 5 concernent le même polymère chauffé pendant 24 heures respectivement à 90°C et 140°C en présence d'environ 1 ppm d'oxygène.

On observe une augmentation de la viscosité avec la température due essentiellement à une augmentation des interactions hydrophobes.

On contrôle par spectroscopie infrarouge que la structure du polymère testé reste stable, donc que sa capacité d'inhibition reste entière et semblable à l'origine.

D'une manière comparative, et pour des mêmes conditions d'essai, on a constaté que le polyacrylamide partiellement hydrolysé à 17 % s'hydrolyse jusqu'à environ 60 % et que la chaîne commence à se dégrader. Ce test n'est pas illustré ici.

### Test 3 :

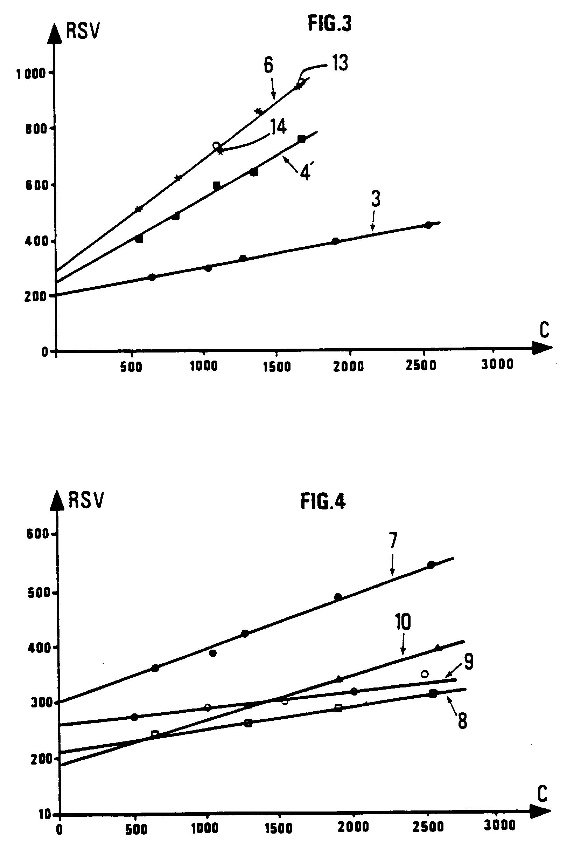

Pour confirmer la stabilité du polymère chauffé à 90°C, on a maintenu la température pendant 48 heures puis jusqu'à 120 heures. La droite 4' de la figure 3 correspond à 24 heures de chauffe. Sur cette figure 3, les points représentés par les croix du type 13 sont obtenus après 48 heures de chauffe et les points représentés par les croix du type 14, après 120 heures. On observe qu'après 48 heures de chauffe, la viscosité n'augmente plus puisque la droite 6 relie tous les types de croix.

### Test 4 :

Ce test concerne l'influence des ions calcium sur le même polymère. La figure 4 donne la RSV du polymère dans différentes conditions de solutions :
- La droite 7 est une solution de polymère à une concentration de 6 g/litre avec 5 g/litre de KCl.
- La droite 8 est la solution précédente à laquelle on a ajouté 1 g/litre de CaCl₂.
- La droite 9 représente la solution précédente après 36 heures.
- La droite 10 représente la solution précédente après 15 jours.

On observe une augmentation des interactions des motifs hydrophobes entre eux avec le temps, cela est clair en comparant les droites 9 et 10 et plus particulièrement leur pente.

On observe une grande stabilité du polymère testé dans ces conditions de solutions.

Comparativement, un polyacrylamide hydrolysé à 17 % précipite dans les mêmes conditions et la viscosité de la solution chute. Cela est révélé dans les travaux de J. François et T. Schwartz décrits dans "Limites de solubilité des polyacrylamides partiellement hydrolysés en présence d'ions divalents" Makromol. Chem., 2775-2785, 1981, où l'on voit que les polyacrylamides partiellement hydrolysés ne sont stables que pour des concentrations en cations divalents très inférieures à 1 g/litre.

De plus, il est clair que la stabilité au calcium du polymère testé est particulièrement bonne comparativement au polyacrylamide partiellement hydrolysé puisque les limites de stabilité au calcium de celui-ci sont rapidement atteintes compte tenu de son hydrolyse importante en fonction de la température.

L'ensemble des propriétés mises en évidence par les tests 2, 3 et 4 est attribué aux caractéristiques des polymères hydrophiles et hydrophobes quelle que soit leur masse moléculaire. En effet, il semble que les interactions inter et intra chaînes ont un rôle favorable vis-à-vis de la stabilité en température et en cas de contamination.

### Test 5 :

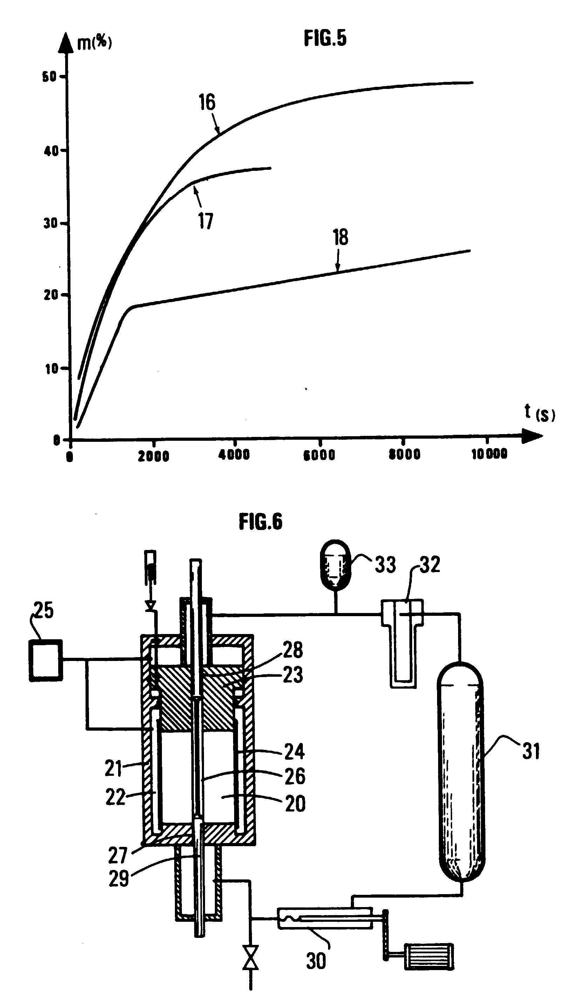

Ce test décrit l'influence du polymère adsorbé sur le processus de désagrégation d'un échantillon argileux sous forme d'une pastille. La pastille est fabriquée à partir d'une roche argileuse dite "Pierre I" contenant environ 50 % d'argile. La roche est dispersée puis recompactée sous 8 t. L'activité de la pastille ainsi obtenue est d'environ 0,82. Le test consiste à suspendre la pastille dans une solution test. Les solutions testées ne comportent pas de KCl. En fonction du temps, la pastille se désagrège et on mesure la quantité d'argile perdue. Sur la figure 5 on a porté la fraction de poids d'argile perdue m (%) en fonction du temps t (s). La courbe 18 représente le test avec une solution de H3.

Comparativement, les courbes 16 et 17 donnent le résultat d'un même test respectivement avec une solution de polyacrylamide partiellement hydrolysé et de l'eau distillée. Au bout d'un temps d'environ 5000 s, l'eau distillée désagrège 40 % d'argile, la solution de polyacrylamide 45 % et la solution comportant du polymère H3 20 %.

Il est clair que l'action conjuguée des caractéristiques d'adsorption et d'hydrophobie est déterminante pour l'inhibition du gonflement et de la dispersion des roches argileuses par les polymères selon l'invention.

### Test 6:

Ce test a été réalisé dans une cellule schématisée sur la figure 6. Cette cellule simule un puits de forage et permet une circulation sous pression d'un fluide dans un alésage foré dans un échantillon de roche. De plus, une sonde de calibrage permet des mesures en continue du diamètre de l'alésage. L'échantillon de roche 20 est placé dans une enceinte 21 comportant un espace annulaire 22 délimité par un bouchon 23, une chemise 24 et le corps de l'enceinte 21. Des moyens de pompage 25 permettent d'appliquer une pression de confinement sur l'échantillon 20. L'échantillon possède un forage 26, perçage qui correspond avec des orifices 27 et 28 respectivement dans le fond de l'enceinte et le chapeau 23. Ces passages permettent la mise en place de la sonde de mesure 29 destinée à mesurer le diamètre intérieur du forage 26. Une pompe de circulation 30 fait circuler un fluide de test dans le forage 26. Un réservoir 31, un filtre 32 et un amortisseur de pulsation 33 complètent l'installation.

L'échantillon 20 a environ 15 cm de diamètre sur 20 cm de long. le forage 26 a 2,54 cm de diamètre.

Le test sera exécuté sous une pression de confinement de 260 bars et une pression de circulation de 250 bars pour un débit de 12 Vmin. La durée des tests est d'environ 48 heures.

L'échantillon est une roche argileuse dite "Pierre I" contenant environ 50 % d'argile. L'échantillon a été traité sous pression de 150 bars de façon à réduire son activité à environ 0,9.

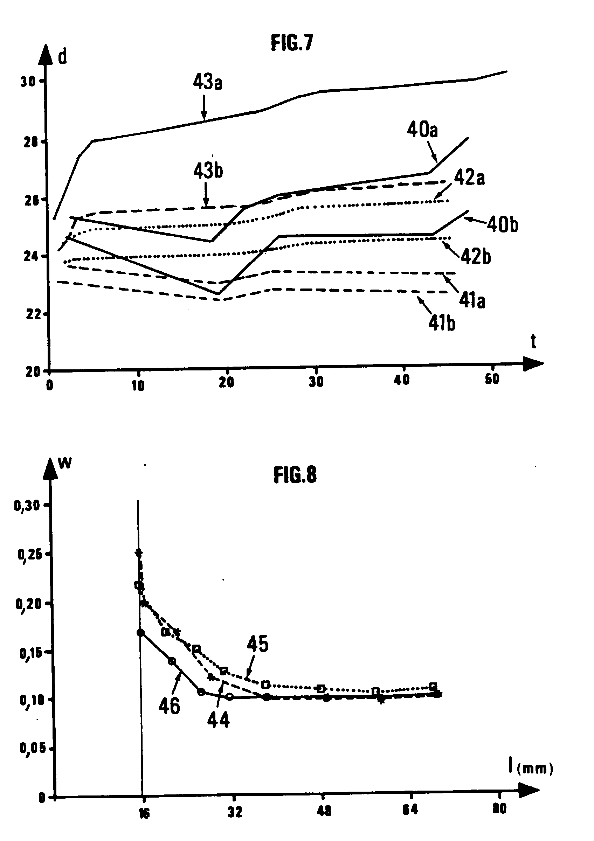

Les résultats des différents tests réalisés avec des fluides différents sont portés sur la figure 7 où l'abscisse représente le temps en heure et l'ordonnée, le diamètre moyen du puits 26 en millimètre.

Les courbes 40a, 40b sont pour de l'eau distillée.

Les courbes 41a, 41b sont pour une solution comportant des polyacrylamides partiellement hydrolysés.

Les courbes 42a, 42b sont pour une solution comportant du H3.

Les courbes 43a, 43b sont pour une solution comportant du H6.

Les indices a et b correspondent à une moyenne des mesures de diamètre du puits 26 suivant quatre directions orthogonales.

Il est clair que l'eau distillée déstabilise complètement l'échantillon. On observe nettement diminutions et élargissements du diamètre du passage .

Le polyacrylamide (41a, 41b) stabilise quelque peu les parois du puits mais n'inhibe pas le gonflement de la roche argileuse. En effet, le diamètre de passage est sensiblement réduit.

Le polymère H3 a une très bonne stabilisation et inhibition. Le diamètre de passage est régulier et très proche de la situation initiale.

Au contraire le polymère H6 entraîne une très forte déstabilisation de l'échantillon dès les premières heures de circulation. En effet, on a par ailleurs constaté que le polymère H6 s'adsorbe selon un mode en deux étapes entraînant la formation d'une couche du type multicouche à la surface d'un échantillon argileux. Lorsque la circulation est établie sur l'échantillon, une partie des molécules qui constitue la couche du type multicouche, n'est plus retenue à la surface de l'échantillon, mais entraînée et remis en circulation. L'épaisseur de la couche est alors réduite sensiblement à l'état d'une monocouche. La monocouche de l'ordre de 0,2 micromètre ne joue pas suffisamment le rôle inhibiteur de gonflement, car notamment ne limitant pas d'une manière efficace la diffusion de l'eau.

En optimisant la structure et la masse moléculaire du polymère, on peut atteindre une épaisseur de couche adsorbée supérieure à 0,4 micromètre et dont la densité est suffisante pour limiter la diffusion de l'eau.

Ces résultats sont confirmés et explicités par la figure 8 où on a porté en abscisse la distance 1 de prélèvements à partir de l'axe du puits, en millimètre, et en ordonnée la teneur w en eau résiduelle de ces prélèvements.

Les courbes 44, 45 et 46 sont respectivement pour les tests à l'eau distillée, aux polyacrylamides et au polymère H3.

Pour une même distance de l'axe du puits, on constate que l'échantillon de roche argileuse est nettement moins hydraté par l'eau d'une solution contenant du polymère H3.

On voit que la forte adsorption et la forte hydrophobicité des polymères hydrophobes inhibent fortement le gonflement d'une formation argileuse.

On voit que pour l'optimisation des polymères selon l'invention, les essais en circulation selon le test 6 sont indispensables en complément des tests de type statique. En effet ces derniers tests, du type 0 et 1, ne permettent pas complètement la mise en évidence du mode d'action de polymères selon la présente invention.

## Revendications

1. Utilisation d'un polymère à motifs hydrophiles (Hy) et hydrophobes (Hb) en solution aqueuse, lesdits motifs hydrophobes contenant entre 1 et 30 C pour les groupements alkyles, la proportion moléculaire desdits motifs hydrophobes étant comprise entre 5 et 60 %, et ledit polymère ayant au moins une des structures suivantes :
* structure a) du type **(Hb)-(chaîne hydrophile Hy)-(Hb)**, dans laquelle la chaîne hydrophile Hy est constituée d'une chaîne de polyoxyéthylène (ou POE) ayant la formule suivante: 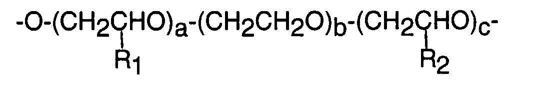
où R₁ et R₂ sont chacun: H, un radical alkyle, aryle ou alkyl-aryle de C₁-C₃₀,
où a, b et c peuvent prendre respectivement les valeurs de : 0 à 50, 0 à 150 et 0 à 50, et (a+b+c) non nul,
- et dans laquelle les groupements hydrophobes Hb sont des chaînes alkyles ou alkyl-aryles C1-C30 reliées à la chaîne hydrophile Hy par des groupements renfermant au moins une fonction uréthanne de la formule générale suivante : 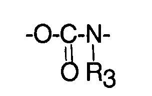
où R₃ est H ou un radical alkyle de C₁-C₃₀, un radical cycloalkyle de C₆-C₃₀, un radical phényle éventuellement substitué par un, deux ou trois radicaux alkyles de C₁-C₃₀, ou un ester gras du type sorbitan,
la masse moléculaire dudit polymère est supérieure à 27000 daltons.
* structure b1) du type **-(Hb)-(Hy)-** avec une répartition statistique, ladite structure b1) étant un dérivé de polyacrylamide issu de la copolymérisation de l'acrylamide avec un co-monomère hydrophobe, et dans lequel le motif hydrophile est l'acrylamide éventuellement sous forme d'acide acrylique, d'acrylate ou de sulfonate suivant la formule suivante : 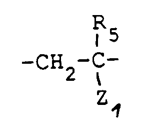 où R₅ est H ou CH₃, et Z₁ est COOH ou CONH₂ ou CONHR"₁, R"₁ est un radical alkyle, aryle ou alkyl-aryle de C₁-C₃₀ substitué sulfonate.
* structure b2) du type **-(Hb)-(Hy)-** avec une répartition statistique, ladite structure étant issue de la polymérisation radicalaire de monomères éthyléniques contenant des fonctions carboxyliques, notamment un copolymère d'acrylate/acrylate d'alkyle correspondant à la formule suivante : 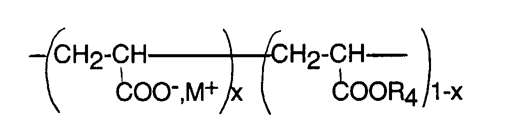 où x est compris entre 0,4 et 0,8, où M est H ou Na ou K ou tout autre ion monovalent, et où la longueur des motifs hydrophobes R₄ est choisie en fonction de la masse moléculaire dudit polymère selon les règles suivantes :
- pour un polymère ayant une masse moléculaire inférieure à 10⁵ daltons, R₄ contient au moins deux atomes de carbone,
- pour un polymère ayant une masse moléculaire comprise entre 10⁵ et 2,5·10⁶ daltons, R₄ contient au moins quatre atomes de carbone,
* structure c) constituée d'une chaîne principale comportant des motifs à groupement hydrophiles Hy et des motifs à chaînes latérales hydrophobes Hb, constituant une structure en "peigne", ladite structure comportant des motifs acides carboxyliques partiellement estérifiés dont les groupements esters, hydrophiles, sont de type POE, et des motifs à chaîne latérale hydrophobe répondant aux formules générales suivantes : 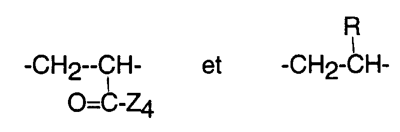
où R est une chaîne hydrophobe et Z₄ est OH ou (POE)R'₁, et la masse moléculaire est supérieur à 20000 daltons,
pour inhiber le gonflement d'argiles réactives en présence d'eau.

2. Utilisation selon la revendication 1, dans laquelle ledit polymère correspondant à la structure a) comporte une chaîne hydrophile Hy de la forme (CH₂CH₂O)_{b}, avec b de 1 à 150, un groupement hydrophobe Hb de la forme CH₃(CH₂)₁₁ ou 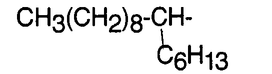
- et dans laquelle les groupements à fonction uréthanne de liaison de Hb sur Hy sont de la forme : 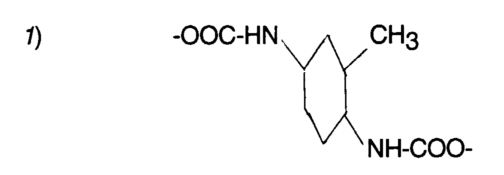
*2)* -OCO-NH-(CH₂)₆-NH-COO-

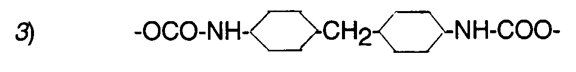

3. Utilisation selon la revendication 1, dans laquelle le motif hydrophobe Hb de la structure b1) a au moins une des formes suivantes :
N-alkylacrylamide, acrylate d'alkyle, acrylamide N-substitué ou acrylate substitué, dont la partie substituée est un tensioactif non ionique, ledit motif hydrophobe ayant la formule générale suivante : 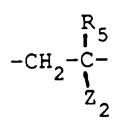 où R₅ est H ou CH₃ et Z₂ est COOR₇, COOR'₁, CONR₁R'₁ ou CONR₁R₇, R₇ étant un tensioactif non ionique constitué d'une chaîne polyoxyéthylènique d'alkyle et R'₁ est un radical alkyle, aryle ou alkyl-aryle de C₁-C₃₀.

4. Utilisation selon l'une des revendications 1 ou 3, caractérisé en ce que des motifs cationiques sont introduits dans la structure b1), lesdits motifs ayant la formule générale suivante : 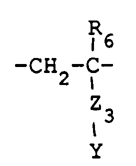 où R₆ est H ou CH₃, Z₃ est (CH₂)ₙ, COO(CH₂)ₙ ou CONH(CH₂)ₙ avec n de 0 à 20, et Y est R₁N+R'₁R₂ dans lequel un seul des trois radicaux peut être H.

5. Utilisation selon la revendication 1, dans laquelle le polymère selon la structure b2) a pour x une valeur environ de 0,55, R₄ comporte quatre atomes de carbone et ledit polymère a une masse moléculaire comprise entre 5·10⁵ et 2·10⁶ daltons et préférentiellement proche de 10⁶ daltons.

6. Utilisation selon la revendication 1, dans laquelle le polymère selon la structure b2) a environ pour x la valeur de 0,8, R₄ comporte quatre atomes de carbone et ledit polymère a une masse moléculaire comprise entre 10⁴ et 5·10⁴ daltons, et préférentiellement proche de 1,7·10⁴ daltons.

7. Utilisation selon la revendication 1, dans laquelle ledit polymère selon la structure c), est tel que R est une chaîne alkyle de C₁₂ à C₁₄ et Z₄ est OH ou (POE)ₘCH₃ et m de 6 à 10.

8. Utilisation selon l'une des revendications précédentes, dans laquelle la solution aqueuse comporte entre 1 et 10 g/litre de polymère hydrophile et hydrophobe.

9. Utilisation selon l'une des revendications 1 à 8, mise en oeuvre dans des fluides en contact avec des formations argileuses réactives, notamment des fluides de forage, de fracturation, de cimentation, de traitement des puits ou de récupération assistée.

## Patentansprüche

1. Verwendung eines Polymeres mit hydrophilen (Hy) und hydrophoben (Hb) Einheiten in wäßriger Lösung, wobei die hydrophoben Einheiten zwischen 1 und 30 Kohlenstoffatome in den Alkylgruppen enthalten, das Molverhältnis der hydrophoben Einheiten zwischen 50 und 60 % enthalten ist und das Polymer wenigstens eine der folgenden Strukturen besitzt:
* Struktur a) vom Typ (Hb)-(hydrophile Kette Hy)-(Hb), worin die hydrophile Kette Hy aus einer Polyoxyethlyen- (oder POE)-Kette mit der folgenden Formel besteht: 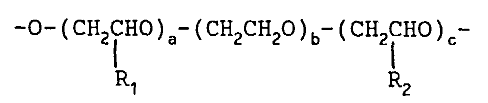
worin R₁ und R₂ jeweils H, ein C₁-C₃₀-Alkyl-, Aryl- oder Alkylarylrest sind,
worin a, b und c die Werte 0 bis 50, 0 bis 150 und respektive 0 bis 50 annehmen können, wobei (a+b+c) nicht null ist,
- und worin die hydrophoben Gruppen Hb C₁-C₃₀-Alkyl- oder Alkylarylgruppen sind, welche mit der hydrophilen Kette Hy durch Gruppen verbunden sind, welche wenigstens eine Urethanfunktion der folgenden allgemeinen Formel umfassen: 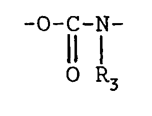
worin R₃ H oder ein C₁-C₃₀-Alkylrest, ein C₆-C₃₀-Cycloalkylrest, ein Phenylrest, der gegebenenfalls durch einen, zwei oder drei C₁-C₃₀-Alkylreste substituiert ist oder ein Fettester vom Sorbitantyp ist und
die Molmasse des Polymeres über 27000 Dalton beträgt;
* Struktur b1) vom Typ -(Hb)-(Hy)-, mit einer statistischen Verteilung, wobei die Struktur b1) ein Polyacrylamidderivat ist, das aus der Copolymerisation von Acrylamid mit einem hydrophoben Comonomer stammt, und worin die hydrophile Einheit Acrylamid ist, gegebenenfalls in Form von Acrylsäure, Acrylat oder Sulfonat gemäß der folgenden Formel: 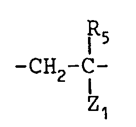 worin R₅H oder CH₃ ist und Z₁ COOH oder CONH₂ oder CONHR"₁ ist, R"₁ mit C₁-C₃₀-Alkyl-, Aryl- oder Alkylarylrest substituiertes Sulfonat ist;
* Struktur b2) vom Typ -(Hb)-(Hy)- mit einer statistischen Verteilung, wobei die Struktur aus der radikalischen Polymerisation von Ethylenmonomeren stammt, welche Carbonsäurefunktionen enthalten, insbesondere ein Acrylat/Alkylacrylat-Copolymer, das der folgenden Formel entspricht: 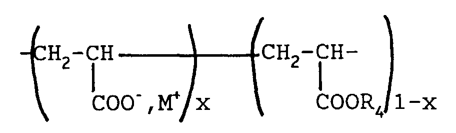 worin x zwischen 0,4 und 0,8 enthalten ist, worin M H oder Na oder K oder jedes andere einwertige Ion ist und worin die Länge der hydrophoben Einheiten R₄ in Funktion der Molmasse des Polymeres gemäß der folgenden Regeln ausgewählt ist:
- für ein Polymer mit einer Molmasse unterhalb von 10⁵ Dalton umfaßt R₄ wenigstens zwei Kohlenstoffatome,
- für ein Polymer mit einer Molmasse, die zwischen 10⁵ und 2,5 x 10⁶ Dalton enthalten ist, umfaßt R₄ wenigstens vier Kohlenstoffatome;
* Struktur c), die aus einer Hauptkette besteht, welche Einheiten mit hydrophilen Gruppen Hy und Einheiten mit hydrophoben Seitenketten Hb, welche eine "Kamm"-Struktur bilden, umfaßt, wobei die Struktur teilweise veresterte Carbonsäureeinheiten, deren hydrophile Estergruppen vom POE-Typ sind und hydrophobe Seitenketteneinheiten umfaßt, welche der folgenden allgemeinen Formel entsprechen: 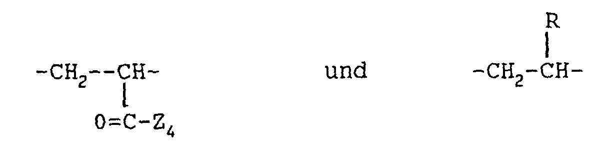
worin R eine hydrophobe Kette ist und Z₄ OH oder (POE)R'₁ ist und die Molmasse mehr als 20.000 Dalton beträgt,
zur Inhibierung des Quellens von reaktiven Tonen in Gegenwart von Wasser.

2. Verwendung nach Anspruch 1, worin das der Struktur a) entsprechende Polymer eine hydrophile Kette Hy der Form (CH₂-CH₂O)_{b}, mit b gleich 1 bis 150, eine hydrophobe Gruppe Hb der Form CH₃(CH₂)₁₁ oder 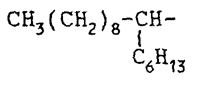 umfaßt,
- und worin die Gruppen mit Urethanfunktion zur Verbindung von Hb mit Hy die Form: 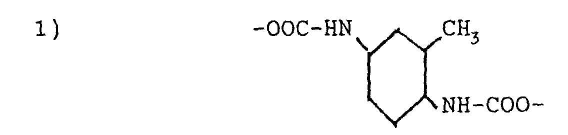
2) -OCO-NH-(CH₂)₆-NH-COO- 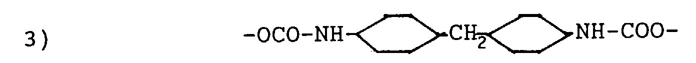
aufweisen.

3. Verwendung nach Anspruch 1, worin die hydrophobe Einheit Hb der Struktur b1) wenigstens eine der folgenden Formen besitzt:
N-Alkylacrylamid, Alkylacrylat, N-substituiertes Acrylamid oder substituiertes Acrylat, dessen substituierter Teil ein nicht-ionisches Tensid ist, wobei die hydrophobe Einheit die folgende allgemeine Formel besitzt: 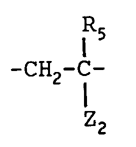 worin R₅ H oder CH₃ ist und Z₂ COOR₇, COOR'₁, CONR₁R'₁ oder CoNR₁R₇ ist, wobei R₇ ein nicht-ionisches Tensid ist, das aus einer polyoxyethylenischen Alkylkette besteht, und R'₁ ein C₁-C₃₀-Alkyl-, Aryl- oder Alkylarylrest ist.

4. Verwendung nach einem der Ansprüche 1 oder 3, dadurch gekennzeichnet, daß kationische Einheiten in die Struktur b1) eingeführt sind, wobei die Einheiten die folgende allgemeine Formel besitzen: 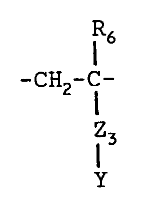 worin R₆ H oder CH₃ ist, Z₃ (CH₂)ₙ, COO(CH₂)ₙ oder CONH(CH₂)ₙ ist, wobei n gleich 0 bis 20 ist, und Y die Bedeutung R₁N⁺R'₁R₂ hat, worin ein einziger der drei Reste H sein kann.

5. Verwendung nach Anspruch 1, worin das Polymer gemäß der Struktur b2) für x einen Wert von etwa 0,55 besitzt, R₄ vier Kohlenstoffatome umfaßt und das Polymer eine Molmasse aufweist, welche zwischen 5 x 10⁵ und 2 x 10⁶ Dalton, vorzugsweise etwa 10⁶ Dalton, enthalten ist.

6. Verwendung nach Anspruch 1, worin das Polymer gemäß der Struktur b2) für x etwa den Wert von 0,8 besitzt, R₄ vier Kohlenstoffatome umfaßt und das Polymer eine Molmasse aufweist, die zwischen 10⁴ und 5 x 10⁴ Dalton, vorzugsweise etwa 1,7 x 10⁴ Dalton, enthalten ist.

7. Verwendung nach Anspruch 1, worin das Polymer der Struktur c) dergestalt ist, daß R eine C₁₂ bis C₁₄-Alkylkette ist und Z₄ gleich OH oder (POE)ₘCH₃ ist und m gleich 6 bis 10 ist.

8. Verwendung nach einem der vorhergehenden Ansprüche, worin die wäßrige Lösung zwischen 1 und 10 g/l des hydrophilen und hydrophoben Polymeres umfaßt.

9. Verwendung nach einem der Ansprüche 1 bis 8, im Einsatz in einem Fluid in Kontakt mit reaktiven tonartigen Formationen, insbesondere in Bohrspülungen, Fraktionierflüssigkeiten, Zementierungsflüssigkeiten, Behandlungsflüssigkeiten für Bohrlöcher oder in Flüssigkeiten für die unterstützte Förderung.

## Claims

1. use of a polymer with hydrophilic (Hy) and hydrophobic (Hb) units in aqueous solution, the said hydrophobic units containing between 1 and 30 C for the alkyl groups, the molecular proportion of the said hydrophobic units being between 5 and 60% and the said polymer having at least one of the following structures:
* structure a) of the type **(Hb)-(hydrophilic chain Hy) - (Hb),** in which the hydrophilic chain is a polyoxyethylene (or POE) chain of the following formula: 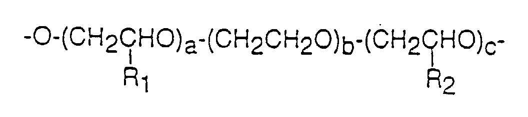
where R₁ and R₂ are each: H, an alkyl, aryl or alkyl-aryl radical of C₁-C₃₀,
where a, b and c may have respectively the values: 0 to 50, 0 to 150 and 0 to 50, and (a+b+c) is not zero,
- and in which the hydrophobic groups (Hb) are C₁-C₃₀ alkyl or alkyl-aryl chains linked to the hydrophilic chain Hy by groups containing at least one urethane function of the following general formula: 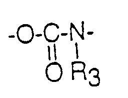
where R₃ is H or a C₁-C₃₀ alkyl radical, a C₆-C₃₀ cycloalkyl radical, a phenyl radical possibly substituted by one, two or three C₁-C₃₀ alkyl radicals, or a fatty ester of the sorbitan type,
the molecular weight of the said polymer is greater than 27000 dalton.
* structure b1) of the type **-(Hb)-(Hy)-** - with a statistical distribution, the said structure b1) being a polyacrylamide derivative resulting from copolymerization of acyrlamide with a hydrophobic co-monomer, and in which the hydrophilic unit is the acrylamide possibly in the form of acrylic acid, acrylate or sulphonate as expressed by the following formula: 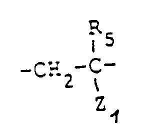 where R₅ is H or CH₃ and Z₁ is COOH or CONH₂ or CONHR"₁, R"₁ is a substituted alkyl, aryl or alkyl-aryl sulphonate radical.
* structure b2) of the type **-(Hb) - (By)-** with a statistical distribution, the said structure resulting from the radical polymerisation of ethylene monomers containing carboxylic functions, particularly an acrylate/alkyl acrylate copolymer corresponding to the following formula: 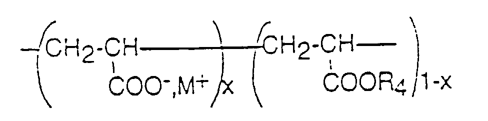 where x is in the range between 0.4 and 0.8, where M is H or Na or K or any other monovalent ion and where the length of the hydrophobic units R₄ is selected as a function of the molecular weight of the said polymer in compliance with the following rules:
- for a polymer of a molecular weight of less than 10⁵ dalton, R₄ contains at least two carbon atoms,
- for a polymer of a molecular weight in the range between 10⁵ and 2.5.10⁶ dalton, R₄ contains at least four carbon atoms,
* structure c) composed of a main chain containing units with hydrophilic Hy groups and units with hydrophobic Hb side chains, forming a "comb" structure, the said structure containing partially esterified carboxylic acid groups, in which the hydrophilic ester groups are of the POE type and the units with a hydrophobic side chain comply with the following general formulae: 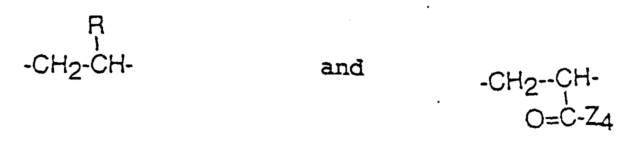 where R is a hydrophobic chain and Z₄ is OH or (POE)R'₁, and the molecular weight is greater than 20000 dalton, in order to inhibit the swelling of reactive clays in the presence of water.

2. Use as claimed in claim 1, in which the said polymer corresponding to structure a) has a hydrophilic chain Hy in the form (CH₂CH₂O)_{b}, where b is between 1 and 150, a hydrophilic group Hb in the form CH₃(CH₂)₁₁ or 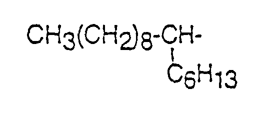
- and in which the urethane function groups linking Hb to Hy way are in the form: 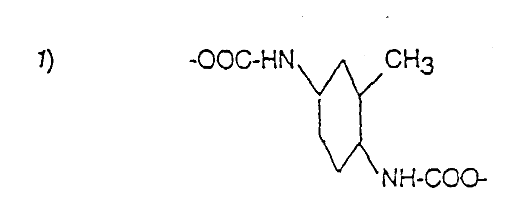
*2)* -OCO-NH-(CH₂)₆-NH-COO-

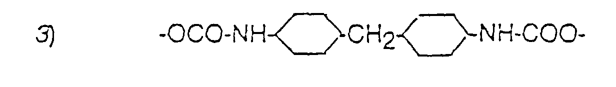

3. Use as claimed in claim 1, in which the hydrophobic unit Hb of structure b1) has at least one of the following forms:
N-alkylacrylamide, alkyl acrylate, N-substituted acrylamide or substituted acrylate, the substituted part of which is a non-ionic surfactant, the said hydrophobic unit being of the general formula: 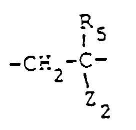 where R₅ is H or CH₃ and Z₂ is COOR₇, COOR'₁, CONR'₁R'₁ or CONR₁R₇, R₇ is a non-ionic surfactant consisting of an alkyl polyoxyethylene chain and R'₁ is a C₁-C₃₀ alkyl, aryl or alkyl-aryl radical.

4. Use as claimed in one of claims 1 or 3, characterised in that cationic units can be introduced into structure b1), the said units being of the following general formula: 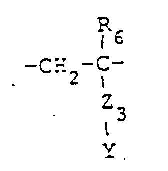 where R₆ is H or CH₃, Z₃ is (CH₂)ₙ, COO(CH₂)ₙ or CONH(CH₂)ₙ where n is from 0 to 20 and Y is R₁N⁺R'₁R₂ in which only one of the three radicals can be H.

5. use as claimed in claim 1, in which the polymer of structure b2) may have a value of approximately 0.55 for x, R₄ may have four carbon atoms and the said polymer may have a molecular weight ranging between 5·10⁵ and 2·10⁶ dalton and preferably approximately 10⁶ dalton.

6. Use as claimed in claim 1, in which the polymer of structure b2) may have a value of approximately 0.8 for x, R₄ may have four carbon atoms and the said polymer has a molecular weight ranging between 10⁴ and 5·10⁴ dalton, and preferably about 1.7·10⁴ dalton.

7. Use as claimed in claim 1, in which the said polymer of structure c) is such that R is a C₁₂ to C₁₄ alkyl chain and Z₄ is OH or (POE)ₘCH₃ where m is from 6 to 10.

8. Use as claimed in one of the preceding claims, in which the aqueous solution contains between 1 and 10 g/litre of hydrophilic and hydrophobic polymer.

9. Use as claimed in one of claims 1 to 8, in conjunction with fluids in contact with reactive clay formations, in particular fluids used for drilling, fracturing, cementing, well treatment or assisted recovery.
